(19) Europäisches Patentamt

European Patent Office

Office européen des brevets

(11) **EP 4 365 421 B1**

(12) **EUROPÄISCHE PATENTSCHRIFT**

(45) Veröffentlichungstag und Bekanntmachung des Hinweises auf die Patenterteilung:
**13.05.2026   Patentblatt 2026/20**

(21) Anmeldenummer: **23212574.0**

(22) Anmeldetag: **14.12.2018**

(51) Internationale Patentklassifikation (IPC):
*F01N 3/10* (2006.01)   *B01D 53/94* (2006.01)
*B01J 23/63* (2006.01)   *F01N 3/035* (2006.01)
*B01J 35/56* (2024.01)

(52) Gemeinsame Patentklassifikation (CPC):
**B01D 53/945; B01J 23/63; B01J 35/56;**
**F01N 3/035; F01N 3/101;** B01D 2255/1023;
B01D 2255/1025; B01D 2255/2061;
B01D 2255/2063; B01D 2255/2065;
B01D 2255/2066; B01D 2255/20715;
B01D 2255/407; B01D 2255/908; B01D 2255/9155;
(Forts.)

(54) **KATALYTISCH AKTIVES PARTIKELFILTER**

CATALYTICALLY ACTIVE PARTICULATE FILTER

FILTRE À PARTICULES À ACTIVITÉ CATALYTIQUE

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität:  **19.12.2017   EP 17208615**

(43) Veröffentlichungstag der Anmeldung:
**08.05.2024   Patentblatt 2024/19**

(62) Dokumentnummer(n) der früheren Anmeldung(en) nach Art. 76 EPÜ:
**18816073.3 / 3 727 653**

(73) Patentinhaber: **Umicore AG & Co. KG**
**63457 Hanau-Wolfgang (DE)**

(72) Erfinder:
• **SCHOENHABER, Jan**
  **64287 Darmstadt (DE)**
• **DEIBEL, Naina**
  **64319 Pfungstadt (DE)**
• **ROESCH, Martin**
  **63110 Rodgau (DE)**
• **SPIESS, Stephanie**
  **64289 Darmstadt (DE)**
• **GOTTHARDT, Meike Antonia**
  **60385 Frankfurt (DE)**
• **SCHICHTEL, Nicole**
  **35510 Butzbach Hoch-Weisel (DE)**

(56) Entgegenhaltungen:
EP-A1- 1 974 810     EP-A1- 2 322 773
EP-A1- 2 650 042     WO-A1-2017/109514

(52)  Gemeinsame Patentklassifikation (CPC): (Forts.)
      B01D 2258/014; Y02T 10/12

**Beschreibung**

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/-Kraftstoff-Gemisch betriebenen Verbrennungsmotoren eignet.

Abgase von mit stöchiometrischem Luft/Kraftstoff-Gemisch betriebenen Verbrennungsmotoren, also z. B. mit Benzin oder Erdgas betriebene Ottomotoren, werden in herkömmlichen Verfahren mit Hilfe von Drei-Wege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis λ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist λ < 1 (z. B. 0,9) bedeutet dies "Luftmangel", man spricht von einem fetten Abgasgemisch, λ > 1 (z. B. 1,1) bedeutet "Luftüberschuss" und das Abgasgemisch wird als mager bezeichnet. Die Aussage λ = 1,1 bedeutet, dass 10% mehr Luft vorhanden ist, als zur stöchiometrischen Reaktion notwendig wäre.

Neben den gasförmigen Schadstoffen enthält das Abgas von Verbrennungsmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren, wie Ottomotoren, sehr klein und weisen eine durchschnittliche Partikelgröße kleiner 1 μm auf. Typische Partikelgrößen liegen im Bereich von 10 nm bis 200 nm. Des Weiteren ist die emittierte Partikelmenge sehr gering und bewegt sich im Bereich von 2 mg/km bis 4 mg/km.

Mit der europäischen Abgasnorm Euro 6c ist eine Umstellung des Grenzwertes für solche Partikel vom Partikelmassengrenzwert auf einen kritischeren Partikelzahlgrenzwert von 6 x 10$^{11}$/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen.

Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1657410 A2 beschreibt auch bereits eine Kombination beider Beschichtungsarten, d. h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann.

Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

FR 3020091 A1 offenbart ein Partikelfilter, das eine Beschichtung in den porösen Wänden, sowie Beschichtungen auf den Oberflächen der Eingangs- und Ausgangskanäle trägt. Letztere erstrecken sich auf einem Teilbereich der Filterlänge und zwar sowohl auf den Eingangs- wie auf den Ausgangsoberflächen auf der Seite des Filters, an der das Abgas eintritt.

Weitere Dokumente, die mit katalytisch aktiven Beschichtungen versehene Filtersubstrate beschreiben, sind EP 3205388 A1, EP 3207977 A1, EP 3207978 A1, EP 3207987 A1, EP 3207989 A1, EP 3207990 A1, EP 3162428 A1, EP 2650042 A1, EP 1974810 A1 und EP 2322773 A1.

Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben. Dabei soll das Partikelfilter einen möglichst hohen Umsetzungsgrad für die gasförmigen Schadstoffe und Partikel aufweisen, insbesondere auch nach einer Alterung, die einer Belastung gemäß der gesetzlichen Dauerlaufanforderungen entspricht. Zugleich sollte das Filter einen möglichst niedrigen Staudruck aufweisen, damit die Motorleistung erhalten bleibt und ein möglichst niedriger Kraftstoffverbrauch verwirklicht werden kann.

Die vorliegende Erfindung betrifft ein Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und eine Beschichtung Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind, dadurch gekennzeichnet, dass sich Beschichtung Z in den porösen Wänden befindet und sich ausgehend vom ersten Ende des Wandflussfilters über die Länge L erstreckt und aktives Aluminiumoxid, mindestens, vorzugsweise zwei voneinander verschiedene Cer/Zirkonium/Seltenerdmetall-Mischoxide und mindestens ein Platingruppenmetall aufweist, dadurch gekennzeichnet, dass das zweite Cer/Zirkonium/Seltenerdmetall-Mischoxid zwei Seltenerdmetalle aufweist und der Gehalt des zweiten Seltenerdmetalls 2 % bis 15 % bezogen auf das Gewicht des zweiten Cer/Zirkonium/Seltenerdmetall-Mischoxids beträgt und beide Cer/Zirkonium/ Seltenerdmetall-Mischoxide mit Palladium und Rhodium, Platin und Rhodium oder Platin,Palladium und Rhodium aktiviert sind.

Die Beschichtung Z ist katalytisch aktiv, insbesondere bei Betriebstemperaturen von 250 °C bis 1100 °C. Sie enthält mehrere Edelmetalle, die auf zwei voneinander verschiedenen Sauerstoffspeicherkomponenten fixiert sind.

Die Sauerstoffspeicherkomponenten sind Cer/Zirkonium/Seltenerdmetall-Mischoxide. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.

Bevorzugt sind Lanthanoxid, Yttriumoxid und/oder Praseodymoxid. Überraschenderweise hat sich gezeigt, dass eine Kombination unterschiedlicher Cer/Zirkonium/Seltenerdmetall-Mischoxide eine stark verbesserte Umsetzung gasförmiger Schadstoffe nach harter Alterung bewirken kann. Besonders bevorzugt als Seltenerdmetalle sind in diesem Zusammenhang Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid.

In Ausführungsformen der vorliegenden Erfindung sind die Sauerstoffspeicherkomponenten frei von Neodymoxid.

In Ausführungsformen der vorliegenden Erfindung liegt in Beschichtung Z das Gewichtsverhältnis von Aluminiumoxid zur Summe der beiden Cer/Zirkonium/Seltenerdmetall-Mischoxide im Bereich von 10:90 bis 60:40 liegt, vorzugsweise im Bereich von 20:80 bis 50:50 und besonders bevorzugt im Bereich von 25:75 bis 35:65. Die Beschichtung Z umfasst in bevorzugten Ausführungsformen jeweils Lanthan-stabilisiertes Aluminiumoxid in Mengen von 10 bis 60 Gew.-%, bevorzugt 20 bis 50, besonders bevorzugt 25 bis 35 Gew.-%, sowie Sauerstoffspeicherkomponenten in Mengen von 40 bis 90 Gew.-%, bevorzugt 50 bis 80 Gew.-%, besonders bevorzugt 65 bis 75 Gew.-%, jeweils bezogen auf die Summe der Gewichte von Aluminiumoxid und Sauerstoffspeicherkomponenten in der Beschichtung Z.

Die Beschichtung Z umfasst zwei voneinander verschiedene Sauerstoffspeicherkomponenten, wobei das Gewichtsverhältnis vom ersten Cer/Zirkonium/Seltenerdmetall-Mischoxid zum zweiten Cer/Zirkonium/Seltenerdmetall-Mischoxid im Bereich von 4:1 bis 1:4, vorzugsweise im Bereich von 3:1 bis 1:3 und besonders bevorzugt im Bereich von 2:1 bis 1:2 liegt.

In Ausführungsformen der vorliegenden Erfindung umfasst Beschichtung Z eine erste und eine zweite Sauerstoffspeicherkomponente, wobei die erste Sauerstoffspeicherkomponente einen höheren Gehalt an Zirkoniumoxid aufweist als die zweite Sauerstoffspeicherkomponente.

Erfindungsgemäß kann das Masseverhältnis von Ceroxid zu Zirkoniumoxid in den Cer/Zirkonium/Seltenerdmetall-Mischoxiden in weiten Grenzen variieren. Es beträgt beispielsweise 0,1 bis 1,5, bevorzugt 0,2 bis 1,25 oder 0,3 bis 1. Weiterhin ist bevorzugt, wenn die erste Sauerstoffspeicherkomponente ein Gewichtsverhältnis von Ceroxid zu Zirkoniumoxid von 0,7 bis 0,1 aufweist, welches kleiner ist als im zweiten Cer/Zirkonium/Seltenerdmetall-Mischoxid, das ein Gewichtsverhältnis von Ceroxid zu Zirkoniumoxid von 0,5 bis 1,5 aufweist. Weitere mehr bevorzugte Ausführungsformen enthalten eine erste Sauerstoffspeicherkomponente mit einem Gewichtsverhältnis von Ceroxid zu Zirkoniumoxid von 0,6 bis 0,2 und eine zweite Sauerstoffspeicherkomponente mit einem Gewichtsverhältnis von Ceroxid zu Zirkoniumoxid von 0,6 bis 1,2. Wieder andere ganz bevorzugte Ausführungsformen enthalten eine erste Sauerstoffspeicherkomponente mit einem Gewichtsverhältnis von Ceroxid zu Zirkoniumoxid von 0,5 bis 0,3 und die zweite Sauerstoffspeicherkomponente weist ein Gewichtsverhältnis von Ceroxid zu Zirkoniumoxid von 0,7 bis 1,0 auf.

In einer bevorzugten Ausführungsform ist das erfindungsgemäße Partikelfilter so ausgestaltet, dass das erste Cer/Zirkonium/Seltenerdmetall-Mischoxid einen Ceroxid-Gehalt von 10 % bis 40 % bezogen auf das Gewicht des ersten Cer/Zirkonium/Seltenerdmetall-Mischoxids, mehr bevorzugt von 15 % bis 35 % und ganz besonders bevorzugt von 20 % bis 30 % bezogen auf das Gewicht des ersten Cer/Zirkonium/Seltenerdmetall-Mischoxids aufweist.

Demgegenüber liegt der Zirkoniumoxid-Gehalt im ersten Cer/Zirkonium/Seltenerdmetall-Mischoxid bei 40 % bis 90 % bezogen auf das Gewicht des ersten Cer/Zirkonium/Seltenerdmetall-Mischoxids. Vorteilhaft ist, wenn der Zirkoniumoxid-Gehalt im ersten Cer/Zirkonium/Seltenerdmetall-Mischoxid zwischen 50 % bis 75 %, ganz bei 55 % bis 65 % bezogen auf das Gewicht des ersten Cer/Zirkonium/Seltenerdmetall-Mischoxids liegt.

Gleichfalls sollte im zweiten Cer/Zirkonium/Seltenerdmetall-Mischoxid einen Ceroxid-Gehalt von 25 % bis 60 % bezogen auf das Gewicht des zweiten Cer/Zirkonium/Seltenerdmetall-Mischoxids vorherrschen. Vorteilhafter ist, wenn im zweiten Cer/Zirkonium/Seltenerdmetall-Mischoxid einen Ceroxid-Gehalt von 30 % bis 55 %, ganz bevorzugt von 35 % bis 50 % bezogen auf das Gewicht des zweiten Cer/Zirkonium/Seltenerdmetall-Mischoxids gegeben ist.

In einer weiteren bevorzugten Ausführungsform weist das zweite Cer/Zirkonium/Seltenerdmetall-Mischoxid einen Zirkoniumoxid-Gehalt von 20 % bis 70 % bezogen auf das Gewicht des zweiten Cer/Zirkonium/Seltenerdmetall-Mischoxids auf. Hier ist mehr bevorzugt, wenn das zweite Cer/Zirkonium/Seltenerdmetall-Mischoxid einen Zirkoniumoxid-Gehalt von 30 % bis 60 % und ganz besonders bevorzugt von 40 % bis 55 % bezogen auf das Gewicht des zweiten Cer/Zirkonium/Seltenerdmetall-Mischoxids aufweist.

Erfindungsgemäß bevorzugt ist, wenn beide Cer/Zirkonium/Seltenerdmetall-Mischoxide mit Lanthanoxid dotiert sind, so dass bevorzugt der Gehalt an Lanthanoxid >0 % bis 10 % bezogen auf das Gewicht des Cer/Zirkonium/Seltenerdmetall-Mischoxids beträgt. Diese Lanthanoxid enthaltende Sauerstoffspeicherkomponenten weisen besonders vorteilhafter Weise ein Masseverhältnis von Lanthanoxid zu Ceroxid von 0,05 bis 0,5 auf.

In der vorliegenden Erfindung umfasst Beschichtung Z Lanthan-stabilisiertes Aluminiumoxid, sowie Palladium und Rhodium, Platin und Rhodium oder Platin, Palladium und Rhodium und zwei verschiedene, Zirkoniumoxid, Ceroxid, Lanthanoxid, sowie Yttriumoxid oder Praseodymoxid umfassende Sauerstoffspeicherkomponenten.

Bevorzugt ist das erste Cer/Zirkonium/Seltenerdmetall-Mischoxid zusätzlich zu Lanthanoxid mit Yttriumoxid dotiert. Ein bevorzugtes Partikelfilter besitzt einen Yttriumoxidgehalt im ersten Cer/Zirkonium/Seltenerdmetall-Mischoxids von 2 % bis 25 % bezogen auf das Gewicht des ersten Cer/Zirkonium/Seltenerdmetall-Mischoxids. Mehr bevorzugt liegt der Yttriumoxidgehalt des ersten Cer/Zirkonium/Seltenerdmetall-Mischoxids zwischen 4 % bis 20 %, ganz bevorzugt bei 10 % bis 15 % bezogen auf das Gewicht des ersten Cer/Zirkonium/Seltenerdmetall-Mischoxids.

Ebenfalls vorteilhaft ist eine Ausführungsform, in der das zweite Cer/Zirkonium/Seltenerdmetall-Mischoxid neben Lanthanoxid mit einem weiteren Metalloxid aus der Gruppe der Seltenerdmetalloxide dotiert ist, bevorzugt mit Praseodym.

In Ausführungsformen der vorliegenden Erfindung ist in Beschichtung Z der Zirkoniumoxidgehalt der yttriumoxidhaltigen Sauerstoffspeicherkomponente größer als der Zirkoniumoxid-Gehalt der praseodymoxidhaltigen Sauerstoffspeicherkomponente, jeweils bezogen auf die jeweilige Sauerstoffspeicherkomponente.

Der Gehalt des zweiten Seltenerdmetalls des zweiten Cer/Zirkonium/Seltenerdmetall-Mischoxids liegt zwischen 2 % bis 15 % bezogen auf das Gewicht des zweiten Cer/Zirkonium/Seltenerdmetall-Mischoxid.

Vorteilhafter ist, wenn der Gehalt des zweiten Seltenerdmetalls des zweiten Cer/Zirkonium/Seltenerdmetall-Mischoxids bei 3 % bis 10 %, ganz bevorzugt bei 4 % bis 8 % bezogen auf das Gewicht des zweiten Cer/Zirkonium/Seltenerdmetall-Mischoxids liegt.

In Beschichtung Z ist dabei der Yttriumoxid-Gehalt der ersten Sauerstoffspeicherkomponente insbesondere 5 bis 15 Gew.-%, bezogen auf das Gewicht der Sauerstoffspeicherkomponente. Das Gewichtsverhältnis von Lanthanoxid zu Yttriumoxid beträgt insbesondere 0.1 bis 1, vorzugsweise 0.15 bis 0.8 und ganz bevorzugt 0.2 bis 0.5.

In Beschichtung Z ist dabei der Praseodym-Gehalt der zweiten Sauerstoffspeicherkomponente insbesondere 2 bis 10 Gew.-%, bezogen auf das Gewicht der Sauerstoffspeicherkomponente. Das Gewichtsverhältnis von Lanthanoxid zu Praseodymoxid beträgt insbesondere 0,1 bis 2,0 vorzugsweise 0,2 bis 1,8 und ganz bevorzugt 0,5 bis 1,5.

Die Beschichtung enthält als katalytisch aktive Elemente Edelmetalle.

Dabei sind beide Cer/Zirkonium/Seltenerdmetall-Mischoxide mit Palladium und Rhodium, Platin und Rhodium oder Platin, Palladium und Rhodium aktiviert.

Die katalytisch aktive Beschichtung befindet sich in den Poren der porösen Wand eines Wandflussfilters. Nur geringe Teile können durch den Beschichtungsprozess bedingt auf der Wand vorliegen. Erfindungsgemäß ist die Beschichtung Z zu > 95% in den Poren der Wand vorhanden.

Die Edelmetalle werden üblicherweise in Mengen von 0,15 g/l bis 5 g/l, bezogen auf das Volumen des Wandflussfilters, eingesetzt. In einer bevorzugten Ausführungsform liegen die Edelmetalle sowohl auf dem Aluminiumoxid als auch auf den Sauerstoffspeicherkomponenten gleichermaßen vor.

Als Trägermaterialien für die Edelmetalle kommen außerdem alle dem Fachmann für diesen Zweck geläufigen Materialien in Betracht. Solche Materialien sind insbesondere Metalloxide mit einer BET-Oberfläche von 30 bis 250 $m^2$/g, bevorzugt von 100 bis 200 $m^2$/g (bestimmt nach DIN 66132 - neueste Fassung am Anmeldetag).

Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise mit Lanthanoxid-, Bariumoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als $La_2O_3$ und bezogen auf das Gewicht des stabilisierten Aluminiumoxides, verwendet wird.

Üblicherweise enthält die Beschichtung Z Sauerstoffspeicherkomponenten in Mengen von 15 bis 120 g/l, bezogen auf das Volumen des Wandflussfilters.

Das Masseverhältnis von Trägermaterialien und Sauerstoffspeicherkomponenten in Beschichtung Z beträgt üblicherweise 0,2 bis 1,5, beispielsweise 0,3 bis 0,8.

In Ausführungsformen der vorliegenden Erfindung enthält Beschichtung Z eine oder mehrere Erdalkaliverbindungen wie z. B. Strontiumoxid, Bariumoxid oder Bariumsulfat. Die Menge an Bariumsulfat je Beschichtung beträgt insbesondere 2 bis 20 g/l Volumen des Wandflussfilters. Insbesondere enthält Beschichtung Z Strontiumoxid oder Bariumoxid.

In weiteren Ausführungsformen der vorliegenden Erfindung enthält Beschichtung Z Additive wie Seltenerdverbindungen wie z. B. Lanthanoxid und/oder Binder, wie z. B. Aluminiumverbindungen. Diese Additive werden in Mengen verwendet, die in weiten Grenzen variieren können und die der Fachmann im konkreten Fall mit einfachen Mitteln bestimmen kann.

Gemäß der vorliegenden Erfindung erstreckt sich die Beschichtung Z ausgehend vom ersten Ende des Wandflussfilters über die gesamte Länge L des Wandflussfilters. Die Beladung des Wandflussfilters mit Beschichtung Z beträgt bevorzugt 20 bis 125 g/l, bezogen auf das Volumen des Wandflussfilters.

In Ausführungsformen der vorliegenden Erfindung enthält Beschichtung Z keinen Zeolithen oder kein Molsieb.

Wandflussfilter, die gemäß vorliegender Erfindung verwendet werden können, sind bekannt und am Markt erhältlich. Sie bestehen beispielsweise aus Siliciumcarbid, Aluminiumtitanat oder Cordierit, haben beispielsweise eine Zelligkeit von 200 bis 400 Zellen pro Quadratzoll (cpsi), d. h. etwa 30 bis 60 Zellen pro $cm^2$, und üblicherweise eine Wandstärke zwischen 6 und 12 mil, bzw. 0,1524 und 0,305 mm.

Sie weisen in unbeschichtetem Zustand beispielsweise Porositäten von 50 bis 80 %, insbesondere 55 bis 75% auf. Ihre durchschnittliche Porengröße beträgt in unbeschichtetem Zustand beispielsweise 10 bis 25 Mikrometer. In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter aufgebracht wird. Thermische Nachbehandlung bzw. Kalzination schließen sich üblicherweise an.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Z bis zu einer Partikelgrößenverteilung von $d_{50}$ = 1 bis 2 $\mu$m und $d_{99}$ = 6 bis 7 $\mu$m gemahlen.

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei kann das Abgas so über ein erfindungsgemäßes Partikelfilter geleitet werden, dass es durch die Kanäle E in das Partikelfilter eintritt und es durch Kanäle A wieder verlässt.

Es ist aber auch möglich, dass das Abgas durch die Kanäle A in das Partikelfilter eintritt und es durch Kanäle E wieder verlässt.

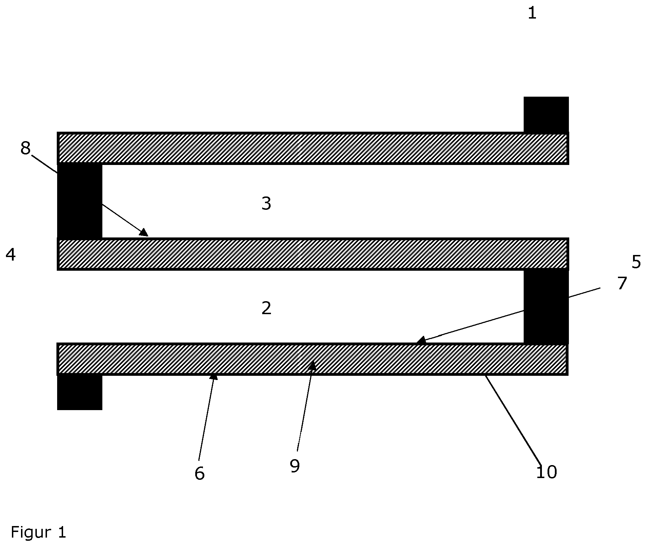

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen $O_E$ (7) bzw. $O_A$ (8) bilden und wobei die Kanäle E (2) am zweiten Ende (5) und die Kanäle A (3) am ersten Ende (4) verschlossen sind. Beschichtung Z (9) befindet sich in den porösen Wänden (6).

Die Erfindung wird in den nachstehenden Beispielen näher erläutert.

Beispiele:

Jeweils vier Filter wurden mit verschiedenen katalytisch aktiven Beschichtungen versehen. Als Filtersubstrate wurden jeweils keramische Wandflussfilter aus hochporösem Cordierit mit einem Durchmesser von 11,84 cm und einer Länge von 15,24 cm sowie einer Zelligkeit von 300 cpsi (46,5 Zellen pro cm$^2$) und einer Wandstärke von 8,5 mil, also 0,02 mm verwendet. Jedes Filter wurde mit einer Beschichtung von 76,27 g/l bezogen auf das Filtervolumen versehen.

Vergleichsbeispiel 1:

Mit Lanthanoxid stabilisiertes Aluminiumoxid wurde zusammen mit einer Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, in Wasser suspendiert. Das Gewichtsverhältnis von Aluminiumoxid zu Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Vergleichsbeispiel 2:

Mit Lanthanoxid stabilisiertes Aluminiumoxid wurde zusammen mit einer Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Das Gewichtsverhältnis von Aluminiumoxid zu Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Erfindungsgemäßes Beispiel 1:

Mit Lanthanoxid stabilisiertes Aluminiumoxid wurde zusammen mit einer ersten Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, und einer zweiten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Beide Sauerstoffspeicherkomponenten wurden zu gleichen Teilen eingesetzt. Das Gewichtsverhältnis von Aluminiumoxid zu Sauerstoffspeicherkomponenten betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Staudruck:

|  | 600 m³/h | 900 m³/h |
| --- | --- | --- |
| Vergleichsbeispiel 1 | 52,9 mbar ± 0,2 mbar | 107,4 mbar ± 0,3 mbar |
| Vergleichsbeispiel 2 | 53,3 mbar ± 0,4 mbar | 107,2 mbar ± 0,5 mbar |
| Beispiel 1 | 53,0 mbar ± 0,6 mbar | 105,9 mbar ± 0,6 mbar |

Zur Bestimmung der katalytischen Eigenschaften des erfindungsgemäßen Filters wurden jeweils ein Filter von Vergleichsbeispiel 1, Vergleichsbeispiel 2 und Beispiel 1 in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 19 Stunden.

Anschließend wurden an einem Motorprüfstand das Anspringverhalten bei konstanter mittlerer Luftzahl $\lambda$ und die dynamische Umsetzung bei Änderung von $\lambda$ geprüft.

Tabelle 1 enthält die Temperaturen $T_{50}$, bei denen jeweils 50% der betrachteten Komponente umgesetzt werden. Dabei wurde das Anspringverhalten bei stöchiometrischer Abgaszusammensetzung ($\lambda = 0,999$ mit ±3,4% Amplitude) bestimmt.

Tabelle 1: Ergebnisse des Anspringverhaltens nach Alterung für Beispiel 1 und Vergleichsbeispiele 1 und 2

|  | $T_{50}$ HC stöch | $T_{50}$ CO stöch | $T_{50}$ NOx stöch |
| --- | --- | --- | --- |
| Vergleichsbeispiel 1 | 391 | 399 | 406 |
| Vergleichsbeispiel 2 | 370 | 377 | 377 |
| Beispiel 1 | 374 | 379 | 379 |

Das dynamische Umsatzverhalten wurde in einem Bereich für $\lambda$ von 0,99 bis 1,01 bei einer konstanten Temperatur von 510°C bestimmt. Die Amplitude von $\lambda$ betrug dabei ±6,8%. Tabelle 2 enthält den Umsatz am Schnittpunkt der CO- und der NOx-Umsatzkurven, sowie den zugehörigen HC-Umsatz.

Tabelle 2: Ergebnisse des dynamischen Umsatzverhaltens nach Alterung für Beispiel 1 und Vergleichsbeispiele 1 und 2

|  | CO/NOx Umsatz am Kreuzungspunkt | HC Umsatz am $\lambda$ des CO/NOx-Kreuzungspunkts |
| --- | --- | --- |
| Vergleichsbeispiel 1 | 82% | 96% |
| Vergleichsbeispiel 2 | 81,5% | 97% |
| Beispiel 1 | 90% | 97% |

Das erfindungsgemäße Beispiel 1 zeigt eine deutliche Verbesserung beim dynamischen CO/NOx-Umsatz nach Alterung, während das Anspringverhalten ähnlich gut ist wie bei Vergleichsbeispiel 2, aber besser als bei Vergleichsbeispiel 1.

OSC-Eigenschaften:

Die Sauerstoffspeicherfähigkeit wurde in zwei unterschiedlichen Versuchen bestimmt. Tabelle 3 zeigt die Werte für den Lambda-Sprungtest, der die statische Sauerstoffspeicherfähigkeit charakterisiert. Dabei wird das Luft-Kraftstoff-Verhältnis $\lambda$ vor dem Filter von fett ($\lambda = 0,96$) nach mager ($\lambda = 1,04$) geändert. Aus der Verzugszeit der Nachkat-Lambdasonde gegenüber der Vorkat-Lambdasonde wird die gespeicherte Sauerstoffmenge berechnet.

Tabelle 3: Statische Sauerstoffspeicherfähigkeit nach Alterung für Beispiel 1 und Vergleichsbeispiele 1 und 2

|  | Sauerstoffspeicherfähigkeit (mg/l) |
| --- | --- |
| Vergleichsbeispiel 1 | 182 |

(fortgesetzt)

|  | Sauerstoffspeicherfähigkeit (mg/l) |
|---|---|
| Vergleichsbeispiel 2 | 132 |
| Beispiel 1 | 194 |

In einem anderen Versuch wird die dynamische Sauerstoffspeicherfähigkeit ermittelt. Dabei wird bei einem Mittelwert von λ =1 das Abgas mit verschiedenen λ Amplituden mit einer Frequenz von 1 Hz beaufschlagt. Das Amplitudensignal der Nachkat-Lambdasonde wird durch das Amplitudensignal der Vorkat-Lambdasonde geteilt. Je kleiner der Wert, desto besser die dynamische Sauerstoffspeicherfähigkeit. Die Ergebnisse sind in Tabelle 4 gezeigt.

Tabelle 4: Dynamische Sauerstoffspeicherfähigkeit nach Alterung für Beispiel 1 und Vergleichsbeispiele 1 und 2

|  | 2% Amplitude | 3,4% Amplitude | 6,8% Amplitude |
|---|---|---|---|
| Vergleichsbeispiel 1 | 0,24 | 0,37 | 0,41 |
| Vergleichsbeispiel 2 | 0,08 | 0,13 | 0,28 |
| Beispiel 1 | 0,09 | 0,14 | 0,23 |

Das erfindungsgemäße Beispiel zeigt sowohl eine hohe statische als auch eine sehr gute dynamische Sauerstoffspeicherfähigkeit nach Alterung.

**Patentansprüche**

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und eine Beschichtung Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen OE bzw. OA bilden und wobei die Kanäle E am zweiten Ende und die Kanäle A am ersten Ende verschlossen sind, wobei sich Beschichtung Z in den porösen Wänden befindet und sich ausgehend vom ersten Ende des Wandflussfilters über die Länge L erstreckt und aktives Aluminiumoxid, mindestens zwei voneinander verschiedene Cer/Zirkonium/Seltenerdmetall-Mischoxide und mindestens ein Platingruppenmetall aufweist,
   **dadurch gekennzeichnet, dass**
   das zweite Cer/Zirkonium/Seltenerdmetall-Mischoxid zwei Seltenerdmetalle aufweist und der Gehalt des zweiten Seltenerdmetalls 2 % bis 15 % bezogen auf das Gewicht des zweiten Cer/Zirkonium/Seltenerdmetall-Mischoxids beträgt und beide Cer/Zirkonium/Seltenerdmetall-Mischoxide mit Palladium und Rhodium, Platin und Rhodium oder Platin, Palladium und Rhodium aktiviert sind.

2. Partikelfilter gemäß Anspruch 1,

   **dadurch gekennzeichnet, dass** das Gewichtsverhältnis von Aluminiumoxid zur Summe der beiden Cer/Zirkonium/Seltenerdmetall-Mischoxide im Bereich von 10:90 bis 60:40 liegt.

3. Partikelfilter gemäß Anspruch 1 und/oder 2,
   **dadurch gekennzeichnet, dass**
   das Gewichtsverhältnis vom ersten Cer/Zirkonium/Seltenerdmetall-Mischoxid zum zweiten Cer/Zirkonium/Seltenerdmetall-Mischoxid im Bereich von 4:1 bis 1:4 liegt.

4. Partikelfilter gemäß einem der vorhergehenden Ansprüche,
   **dadurch gekennzeichnet, dass**
   das erste Cer/Zirkonium/Seltenerdmetall-Mischoxid einen höheren Zirkoniumoxid-Gehalt aufweist als das zweite Cer/Zirkonium/Seltenerdmetall-Mischoxid.

5. Partikelfilter gemäß einem der vorhergehenden Ansprüche,
   **dadurch gekennzeichnet, dass**

das erste Cer/Zirkonium/Seltenerdmetall-Mischoxid ein Gewichtsverhältnis von Ceroxid zu Zirkoniumoxid von 0,7 bis 0,1 aufweist, welches kleiner ist als im zweiten Cer/Zirkonium/Seltenerdmetall-Mischoxid, das ein Gewichtsverhältnis von Ceroxid zu Zirkoniumoxid von 0,5 bis 1,5 aufweist.

6. Partikelfilter gemäß einem der vorhergehenden Ansprüche,
**dadurch gekennzeichnet, dass**
das erste Cer/Zirkonium/Seltenerdmetall-Mischoxid einen Ceroxid-Gehalt von 10 % bis 40 % bezogen auf das Gewicht des ersten Cer/Zirkonium/Seltenerdmetall-Mischoxids aufweist.

7. Partikelfilter gemäß einem der vorhergehenden Ansprüche,
**dadurch gekennzeichnet, dass**
das erste Cer/Zirkonium/Seltenerdmetall-Mischoxid einen Zirkoniumoxid-Gehalt von 40 % bis 90 % bezogen auf das Gewicht des ersten Cer/Zirkonium/Seltenerdmetall-Mischoxids aufweist.

8. Partikelfilter gemäß einem der vorhergehenden Ansprüche,
**dadurch gekennzeichnet, dass**
das zweite Cer/Zirkonium/Seltenerdmetall-Mischoxid einen Ceroxid-Gehalt von 25 % bis 60 % bezogen auf das Gewicht des zweiten Cer/Zirkonium/Seltenerdmetall-Mischoxids aufweist.

9. Partikelfilter gemäß einem der vorhergehenden Ansprüche,
**dadurch gekennzeichnet, dass**
das zweite Cer/Zirkonium/Seltenerdmetall-Mischoxid einen Zirkoniumoxid-Gehalt von 20 % bis 70 % bezogen auf das Gewicht des zweiten Cer/Zirkonium/Seltenerdmetall-Mischoxids aufweist.

10. Partikelfilter gemäß einem der vorhergehenden Ansprüche,
**dadurch gekennzeichnet, dass**
beide Cer/Zirkonium/Seltenerdmetall-Mischoxide mit Lanthanoxid dotiert sind.

11. Partikelfilter gemäß einem der vorhergehenden Ansprüche,
**dadurch gekennzeichnet, dass**
der Gehalt an Lanthanoxid >0 % bis 10 % bezogen auf das Gewicht des jeweiligen Cer/Zirkonium/Seltenerdmetall-Mischoxids beträgt.

12. Partikelfilter gemäß einem der vorhergehenden Ansprüche,
**dadurch gekennzeichnet, dass**
das erste Cer/Zirkonium/Seltenerdmetall-Mischoxid zusätzlich zu Lanthanoxid mit Yttriumoxid dotiert ist.

13. Partikelfilter gemäß einem der vorhergehenden Ansprüche,
**dadurch gekennzeichnet, dass**
der Yttriumoxidgehalt des ersten Cer/Zirkonium/Seltenerdmetall-Mischoxids 2 % bis 25 % bezogen auf das Gewicht des ersten Cer/Zirkonium/Seltenerdmetall-Mischoxids beträgt.

14. Partikelfilter gemäß einem der vorhergehenden Ansprüche,
**dadurch gekennzeichnet, dass**
das zweite Cer/Zirkonium/Seltenerdmetall-Mischoxid neben Lanthanoxid mit Praseodym dotiert ist.

15. Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das **dadurch gekennzeichnet ist, dass** das Abgas über ein Partikelfilter gemäß den Ansprüchen 1 - 14 geleitet wird.

**Claims**

1. Particulate filter for removing particulates, carbon monoxide, hydrocarbons and nitrogen oxides from the exhaust gas of internal combustion engines operated with a stoichiometric air/fuel mixture, comprising a wall-flow filter of length L and a coating Z, wherein the wall-flow filter comprises channels E and A which extend in parallel between a first and a second end of the wall-flow filter and which are separated by porous walls forming surfaces OE and OA, and wherein the channels E are closed at the second end and the channels A are closed at the first end, wherein coating Z is located within the porous walls and extends over the length L from the first end of the wall-flow filter and comprises active aluminium oxide, at least two different cerium/zirconium/rare-earth metal mixed oxides and at least one platinum group metal,

**characterised in that**

the second cerium/zirconium/rare-earth metal mixed oxide comprises two rare-earth metals and the content of the second rare-earth metal is 2% to 15% by weight of the second cerium/zirconium/rare-earth metal mixed oxide, and both cerium/zirconium/rare-earth metal mixed oxides are activated with palladium and rhodium, platinum and rhodium or platinum, palladium and rhodium.

2. Particulate filter according to claim 1,
   **characterised in that** the weight ratio of aluminium oxide to the sum of the two cerium/zirconium/rare earth metal mixed oxides lies in the range from 10:90 to 60:40.

3. Particulate filter according to claim 1 and/or 2,
   **characterised in that**
   the weight ratio of the first cerium/zirconium/rare earth metal mixed oxide to the second cerium/zirconium/rare earth metal mixed oxide lies in the range from 4:1 to 1:4.

4. A particulate filter according to one of the preceding claims,
   **characterised in that**
   the first cerium/zirconium/rare earth metal mixed oxide has a higher zirconium oxide content than the second cerium/zirconium/rare earth metal mixed oxide.

5. A particulate filter according to one of the preceding claims,
   **characterised in that**
   the first cerium/zirconium/rare-earth metal mixed oxide has a weight ratio of cerium oxide to zirconium oxide of 0.7 to 0.1, which is lower than in the second cerium/zirconium/rare-earth metal mixed oxide, which has a weight ratio of cerium oxide to zirconium oxide of 0.5 to 1.5.

6. A particulate filter according to any one of the preceding claims,
   **characterised in that**
   the first cerium/zirconium/rare earth metal mixed oxide has a cerium oxide content of 10% to 40% by weight of the first cerium/zirconium/rare earth metal mixed oxide.

7. A particulate filter according to one of the preceding claims,
   **characterised in that**
   the first cerium/zirconium/rare earth metal mixed oxide has a zirconium oxide content of 40% to 90% by weight of the first cerium/zirconium/rare earth metal mixed oxide.

8. A particulate filter according to one of the preceding claims,
   **characterised in that**
   the second cerium/zirconium/rare earth metal mixed oxide has a cerium oxide content of 25% to 60% by weight of the second cerium/zirconium/rare earth metal mixed oxide.

9. A particulate filter according to one of the preceding claims,
   **characterised in that**
   the second cerium/zirconium/rare earth metal mixed oxide has a zirconium oxide content of 20% to 70% by weight of the second cerium/zirconium/rare earth metal mixed oxide.

10. A particulate filter according to one of the preceding claims,
    **characterised in that**
    both cerium/zirconium/rare earth metal mixed oxides are doped with lanthanum oxide.

11. A particulate filter according to one of the preceding claims,
    **characterised in that**
    the content of lanthanum oxide is >0% to 10% by weight of the respective cerium/zirconium/rare earth metal mixed oxide.

**12.** A particulate filter according to one of the preceding claims,
**characterised in that**
the first cerium/zirconium/rare earth metal mixed oxide is doped with yttrium oxide in addition to lanthanum oxide.

**13.** A particulate filter according to one of the preceding claims,
**characterised in that**
the yttrium oxide content of the first cerium/zirconium/rare earth metal mixed oxide is 2% to 25% by weight of the first cerium/zirconium/rare earth metal mixed oxide.

**14.** A particulate filter according to any one of the preceding claims,
**characterised in that**
the second cerium/zirconium/rare earth metal mixed oxide is doped with praseodymium in addition to lanthanum oxide.

**15.** A method for removing particulates, carbon monoxide, hydrocarbons and nitrogen oxides from the exhaust gas of internal combustion engines operated with a stoichiometric air/fuel mixture, **characterised in that** the exhaust gas is passed through a particulate filter according to claims 1-14.


**Revendications**

**1.** Filtre à particules destiné à éliminer les particules, le monoxyde de carbone, d'hydrocarbures et d'oxydes d'azote des gaz d'échappement de moteurs à combustion interne fonctionnant avec un mélange air/carburant stœchiométrique, comprenant un filtre à flux mural de longueur L et un revêtement Z, le filtre à flux mural comprenant des canaux E et A qui s'étendent parallèlement entre une première et une deuxième extrémité du filtre à flux mural et qui sont séparés par des parois poreuses formant respectivement les surfaces OE et OA, et les canaux E étant obturés à la deuxième extrémité et les canaux A à la première extrémité, le revêtement Z étant situé dans les parois poreuses et s'étendant sur la longueur L à partir de la première extrémité du filtre à flux mural, et comprenant de l'alumine active, au moins deux oxydes mixtes de cérium/zirconium/métaux des terres rares différents les uns des autres et au moins un métal du groupe du platine,
**caractérisé en ce que**
le deuxième oxyde mixte de cérium/zirconium/métal des terres rares contient deux métaux des terres rares et que la teneur en deuxième métal des terres rares est comprise entre 2 % et 15 % par rapport au poids du deuxième oxyde mixte de cérium/zirconium/métal des terres rares, et que les deux oxydes mixtes de cérium/zirconium/métal des terres rares sont activés par du palladium et du rhodium, de platine et de rhodium ou de platine, de palladium et de rhodium.

**2.** Filtre à particules selon la revendication 1,
**caractérisé en ce que** le rapport pondéral entre l'oxyde d'aluminium et la somme des deux oxydes mixtes de cérium/zirconium/métal des terres rares se situe dans la plage de 10:90 à 60:40.

**3.** Filtre à particules selon la revendication 1 et/ou 2,
**caractérisé en ce que**
le rapport pondéral entre le premier oxyde mixte de cérium/zirconium/métal des terres rares et le deuxième oxyde mixte de cérium/zirconium/métal des terres rares se situe dans la plage de 4:1 à 1:4.

**4.** Filtre à particules selon l'une des revendications précédentes,
**caractérisé en ce que**
le premier oxyde mixte de cérium/zirconium/métal des terres rares présente une teneur en oxyde de zirconium supérieure à celle du deuxième oxyde mixte de cérium/zirconium/métal des terres rares.

**5.** Filtre à particules selon l'une des revendications précédentes,
**caractérisé en ce que**
le premier oxyde mixte cérium/zirconium/métal des terres rares présente un rapport pondéral entre l'oxyde de cérium et l'oxyde de zirconium compris entre 0,7 et 0,1, qui est inférieur à celui du deuxième oxyde mixte de cérium/zirconium/métal des terres rares, lequel présente un rapport pondéral entre l'oxyde de cérium et l'oxyde de zirconium compris entre 0,5 et 1,5.

**6.** Filtre à particules selon l'une des revendications précédentes,
**caractérisé en ce que**
le premier oxyde mixte de cérium/zirconium/métal des terres rares présente une teneur en oxyde de cérium comprise entre 10 % et 40 % par rapport au poids du premier oxyde mixte de cérium/zirconium/métal des terres rares.

**7.** Filtre à particules selon l'une des revendications précédentes,
**caractérisé en ce que**
le premier oxyde mixte de cérium/zirconium/métal des terres rares présente une teneur en oxyde de zirconium comprise entre 40 % et 90 % par rapport au poids du premier oxyde mixte de cérium/zirconium/métal des terres rares.

**8.** Filtre à particules selon l'une des revendications précédentes,
**caractérisé en ce que**
le deuxième oxyde mixte de cérium/zirconium/métal des terres rares présente une teneur en oxyde de cérium comprise entre 25 % et 60 % par rapport au poids du deuxième oxyde mixte de cérium/zirconium/métal des terres rares.

**9.** Filtre à particules selon l'une des revendications précédentes,
**caractérisé en ce que**
le deuxième oxyde mixte de cérium/zirconium/métal des terres rares présente une teneur en oxyde de zirconium comprise entre 20 % et 70 % par rapport au poids du deuxième oxyde mixte de cérium/zirconium/métal des terres rares.

**10.** Filtre à particules selon l'une des revendications précédentes,
**caractérisé en ce que**
les deux oxydes mixtes de cérium/zirconium/métal des terres rares sont dopés à l'oxyde de lanthane.

**11.** Filtre à particules selon l'une des revendications précédentes,
**caractérisé en ce que**
la teneur en oxyde de lanthane est comprise entre >0 % et 10 % par rapport au poids de l'oxyde mixte de cérium/zirconium/métal des terres rares concerné.

**12.** Filtre à particules selon l'une des revendications précédentes,
**caractérisé en ce que**
le premier oxyde mixte de cérium/zirconium/métal des terres rares est dopé à l'oxyde d'yttrium en plus de l'oxyde de lanthane.

**13.** Filtre à particules selon l'une des revendications précédentes,
**caractérisé en ce que**
la teneur en oxyde d'yttrium du premier oxyde mixte de cérium/zirconium/métal des terres rares est comprise entre 2 % et 25 % par rapport au poids du premier oxyde mixte de cérium/zirconium/métal des terres rares.

**14.** Filtre à particules selon l'une des revendications précédentes,
**caractérisé en ce que**
le deuxième oxyde mixte de cérium/zirconium/métal des terres rares est dopé au praséodyme en plus de l'oxyde de lanthane.

**15.** Procédé d'élimination des particules, du monoxyde de carbone, des hydrocarbures et des oxydes d'azote des gaz d'échappement de moteurs à combustion interne fonctionnant avec un mélange air/carburant stœchiométrique, **caractérisé en ce que** les gaz d'échappement sont acheminés à travers un filtre à particules selon les revendications 1 à 14.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1657410 A2
- EP 2042226 A2
- DE 102011050788 A1
- FR 3020091 A1
- EP 3205388 A1
- EP 3207977 A1
- EP 3207978 A1
- EP 3207987 A1
- EP 3207989 A1
- EP 3207990 A1
- EP 3162428 A1
- EP 2650042 A1
- EP 1974810 A1
- EP 2322773 A1